# EUROPÄISCHE PATENTSCHRIFT

(11) **EP 2 677 207 B1**
(45) Veröffentlichungstag und Bekanntmachung des Hinweises auf die Patenterteilung: **21.06.2017**
(21) Anmeldenummer: 13001935.9
(22) Anmeldetag: 13.04.2013
(51) Int. Cl.: F16H 57/08, F16H 57/033

(54) **Planetengetriebe und Verfahren zum Verbinden von einem Hohlrad eines Planetengetriebes mit einem Kundenanschlussflansch für flexible kundenspezifische Anschlussmaße und Verwendung eines Planetengetriebes**
Planetary gear mechanism, and method for connecting a hollow wheel of a planetary gear with a customers'connection flange for flexible customer-specific connection dimensions and use of a planetary gear
Engrenage épicycloïdal et procédé destiné à relier une roue creuse d'un engrenage épicycloïdal avec une bride de raccordement de client pour des dimensions de raccordement flexibles spécifiques à un client et utilisation d'un engrenage planétaire

(30) Priorität: 19.06.2012 DE 102012012053; 08.03.2013 DE 102013004059
(43) Veröffentlichungstag der Anmeldung: 25.12.2013
(73) Patentinhaber: ROBERT BOSCH GMBH, 70442 Stuttgart (DE)
(72) Erfinder: Reimann, Mario, 58300 Wetter (DE); Magiera, Markus, 45549 Sprockhoevel (DE); Koester, Thomas, 70199 Stuttgart (DE); Hesterberg, Stefan, 58300 Wetter (DE)
(74) Vertreter: Thürer, Andreas

(56) Entgegenhaltungen:
- EP-A1- 1 326 032
- WO-A1-03/050434
- DE-A1- 2 649 949
- DE-A1- 10 123 548
- DE-A1- 10 229 968
- DE-A1- 10 229 969
- DE-A1- 10 312 941
- DE-A1-102005 052 008
- DE-A1-102006 043 961
- DE-A1-102007 035 777
- HUSTEDE: "Planurex-Planetengetriebe", VDI Z, SPRINGER VDI VERLAG, DE, Nr. 7, 1. April 1986 (1986-04-01), Seiten 233-234, XP002254394, ISSN: 0042-1766

## Beschreibung

Die vorliegende Erfindung bezieht sich auf ein Planetengetriebe und Verfahren zum Verbinden von einem Hohlrad eines Planetengetriebes mit einem Kundenanschlussflansch für flexible kundenspezifische Anschlussmaße und Verwendung eines Planetengetriebes.

Kundenspezifische Getriebelösungen werden gemäß Lastenheftanforderungen der jeweiligen Anwendung realisiert. Die unterschiedlichen Kundenanwendungen erzeugen eine hohe Variantenvielfalt. Hierdurch bedingt kann eine Clusterung des Produktportfolios entstehen. Dabei kommen spezifische Kundenanschlussflansche an einem Hohlrad eines Planetengetriebes zum Einsatz. Die derzeitige technische Lösung sieht ein ein- bzw. zweiteiliges Konzept mit schraubbaren Stützringen vor. Weitere Ansätze basieren auf einem modularen Hohlradaufbau mit geschraubten bzw. verstifteten Einzelkomponenten beziehungsweise in einen Gussdeckel eingepresste Hohlradringe. Dabei steht die Entwicklung neuer Getriebebaureihen unter einem enormen Kostendruck.

Die heutige Marktsituation erfordert eine hohe Varianz in der kundenspezifischen Anschlussgeometrie, wie beispielsweise Zentrierdurchmesser und Lochbild bei eingeschränkten Bauräumen. Dadurch wird der Lösungsraum stark eingeschränkt. Durch ein einteiliges Konzept wird eine hohe Teilevielfalt erzeugt. Die kundenspezifische Differenzierung erfolgt dabei bereits auf Rohteilebene zu einem sehr frühen Zeitpunkt in der Wertschöpfungskette. Dies führt einerseits zu Nachteilen in den Produktherstellungskosten und beeinflusst darüber hinaus massiv Lieferfähigkeiten, Liefertreue und Logistikkonzepte.

Aus der DE 102 29 968 A1 ist es bekannt, eine Planetengetriebestufe mit einer Abtriebseinheit zusammenzubauen, wobei ein Hohlrad der Planetengetriebestufe und ein Gehäuseteil der Abtriebseinheit passgenau ineinander passen. Diese Druckschrift offenbart die Merkmale des Oberbegriffs der unabhängigen Ansprüche.

Die EP1167140A2 offenbart einen Radantrieb, insbesondere für fahrbare Arbeitsmaschinen, mit drehfest am Fahrzeugrahmen angebrachter Tragachse, die über eine Wälzlageranordnung mit einem Hohlrad als Radnabe drehbar verbunden ist.

Es ist die Aufgabe der vorliegenden Erfindung ein verbessertes Planetengetriebe und verbessertes Verfahren zum Verbinden von einem Hohlrad eines Planetengetriebes mit einem Kundenanschlussflansch für flexible kundenspezifische Anschlussmaße und Verwendung eines Planetengetriebes zu schaffen.

Diese Aufgabe wird durch ein Planetengetriebe und ein Verfahren zum Verbinden von einem Hohlrad eines Planetengetriebes mit einem Kundenanschlussflansch für flexible kundenspezifische Anschlussmaße und eine Verwendung eines Planetengetriebes gemäß den Hauptansprüchen gelöst.

Ein Baukastenkonzept lässt sich zum modularen Aufbau von Planetengetrieben einsetzen. Komplette Getriebebaureihen lassen sich als Baukastensystem zum modularen Aufbau von Planetengetrieben mit einem hohen Maß an Standardisierung umzusetzen. So kann eine kostenoptimierte Getriebebaureihe mittels Clusterung des Produktportfolios zur Generierung der Nenngrößen und somit der technischen Randbedingungen aufgebaut werden. Um den kundenspezifischen Anschlussflansch unabhängig von dem eigentlichen Planetengetriebe zu realisieren, kann ein zweiteiliger Aufbau und somit eine Entkopplung der Funktionsbereiche Innenverzahnung und Kundenanschluss innerhalb der Hohlradgeometrie umgesetzt werden. Eine unter Betrachtung von Kraftschluss, Formschluss und/oder Stoffschluss passende Welle-Nabe-Verbindungen kann durch eine Übergangspassung in Verbindung mit einem thermischen Fügeprozess realisiert werden.

Ein mehrteiliger Aufbau lässt sich ohne Schraubverbindungen in einem begrenzten Bauraum realisieren, wobei der Materialeinsatz, beispielsweise durch entsprechende Wandstärken oder keine zusätzlichen Schrauben sowie der Fertigungs- und Montageaufwand optimal gestaltbar ist. Die kundenunabhängige Standardisierung des innenverzahnten Hohlradringes ermöglicht eine Volumenbündelung und effiziente Herstellung bei flexiblen Kundenanschlussmaßen, Felgendurchmesser und standardisierter Verzahnungsgeometrie.

Die vorliegende Erfindung schafft ein Verfahren zum Verbinden von einem Hohlrad eines Planetengetriebes mit einem Kundenanschlussflansch für flexible kundenspezifische Anschlussmaße, wobei das Verfahren die folgenden Schritte umfasst:
Bereitstellen des Hohlrads, wobei das Hohlrad einen Vorsprung aufweist, wobei im Schritt des Bereitstellens ferner der Kundenanschlussflansch bereitgestellt wird, wobei der Kundenanschlussflansch einen Vorsprung aufweist, wobei der Vorsprung des Hohlrads und der Vorsprung des Kundenanschlussflansches ineinander steckbar sind; und
Verpressen des Hohlrads und des Kundenanschlussflansches, wobei der Vorsprung des Hohlrads und der Vorsprung des Kundenanschlussflansches ausgebildet sind, eine Übergangspassung zu bilden; und
Stoffschlüssiges Verbinden des Hohlrads mit dem Kundenanschlussflansch mittels eines Fügeprozesses.

Unter einem Planetengetriebe kann ein Umlaufrädergetriebe verstanden werden. Das Planetengetriebe kann ein zentrales Sonnenrad, zumindest ein mit dem Sonnenrad kämmenden Planetenrad und ein das zumindest eine Planetenrad kämmendes Hohlrad aufweisen. Unter einem Hohlrad kann ein innenverzahntes Zahnrad verstanden werden. Ein Hohlrad kann als ein rohrförmiges Bauteil mit einem Zentrierbund ausgebildet sein. Unter einem Kundenanschlussflansch kann ein Stützring verstanden werden. Unter einem Kundenanschlussflansch kann ein Stützring mit einem Anschlussflansch verstanden werden. Ein Kundenanschlussflansch kann das Zusammenfügen des Planetengetriebes mit einem weiteren Bauteil und oder Baugruppe mit kundenspezifischen Anschlussmaßen erlauben. Ein Kundenanschlussflansch kann neben der Positionierung der Teile auch Betriebskräfte übertragen. Unter einem Kundenanschlussflansch kann ein hohlzylindrisches Bauteil mit einer Durchführung für eine Welle und gleichzeitig oder alternativ mit einer Durchführung für das Planetengetriebe verstanden werden. Ein Kundenanschlussflansch kann mit einem weiteren Bauteil oder mit einer weiteren Bauteilgruppe verschraubbar und gleichzeitig oder alternativ fest verbindbar sein. Unter einem Vorsprung kann hier eine auf einer Stirnfläche ringförmig vorstehende Nase verstanden werden. Ein Querschnitt eines Vorsprungs kann eine rechteckige Grundform aufweisen, wobei die Kanten gebrochen sein können und gleichzeitig oder alternativ eine Fase aufweisen können. Eine äußere Mantelfläche eines zum anderen Vorsprung innenliegend angeordneten Vorsprungs kann parallel zur Hauptrotationsachse der hohlzylindrischen Bauteile angeordnet sein, eine innere Mantelfläche eines anderen Vorsprungs kann parallel zur Hauptrotationsachse angeordnet sein. Ein Vorsprung eines Hohlrads und ein Vorsprung eines Kundenanschlussflansches können ineinander steckbar sein. Dabei können die das Hohlrad und der Kundenanschlussflansch unter geringem Kraftaufwand und/oder unter erheblichem Kraftaufwand und/oder nur unter hohem Druck zusammenfügen. Das Hohlrad und der Kundenanschlussflansch können mit einem Handhammer zusammenfügbar sein. Der Vorsprung des Hohlrads und der Vorsprung des Kundenanschlussflansches können derart ausgebildet sein, dass eine Übergangspassung zwischen beiden besteht. Unter dem Verpressen des Hohlrads mit dem Kundenanschlussflansch kann ein Einpressen verstanden werden. Das Verpressen kann unter Druck und/oder unter hohem Druck erfolgen.

Vorteilhafterweise kann eine Ausführungsform entsprechend der vorliegenden Erfindung eine geringe Durchlaufzeit für den Kundenanschlussflansch durch eine einfache Geometrie und Entfall einer zusätzlichen Wärmebehandlung erzielen. Dies kann eine Reduzierung von Rüstzeiten und Vereinfachung des Teilehandlings durch Material und Gewichtsreduzierung erlauben. Von Vorteil ist auch der Einsatz produktiver Fertigungsverfahren für das Verzahnungsbauteil durch Volumenbündelung und Vereinfachung der Bauteilgeometrie, insbesondere kann hier beispielsweise Räumen und/oder induktive Kurzzeitwärmebehandlung eingesetzt werden. Das hier vorgestellte Verfahren kann eine Bildung der Varianz zu einem späten Zeitpunkt in der Wertschöpfungskette ermöglichen. Diese Lösung hat den Vorteil einer kostengünstigeren Lösung durch die Gestaltung aufmaßoptimierter Rohteile wie beispielsweise das Nutzen eines Sägeabschnitts eines Rohrs für das Hohlrad sowie Einsatz kostengünstiger Werkstoffe für den Kundenanschlussflansch. So kann beispielsweise Bau- statt Vergütungsstahl eingesetzt werden. Eine Vereinfachung und eine Teilereduktion am Gesamtgetriebe kann durch das Montagekonzept und das modulare Design gemäß der vorliegenden Erfindung erzielt werden. Das hier vorgestellte Verfahren ermöglicht eine einfache Wälzlagermontage durch Einpressen in ein Hohlrad ohne zusätzliche Fixierung des Außenrings beziehungsweise des Kundenanschlussflansches.

Entsprechend einer weiteren Ausführungsform der vorliegenden Erfindung kann das Verfahren einen weiteren Schritt des Bereitstellens aufweisen, wobei im weiteren Schritt des Bereitstellens das Hohlrad und ein weiterer Kundenanschlussflansch bereitgestellt werden, wobei der weitere Kundenanschlussflansch vom Kundenanschlussflansch abweichende Kundenanschlussmaße aufweist, wobei der weitere Kundenanschlussflansch einen weiteren Vorsprung aufweist, wobei der Vorsprung des Hohlrads und der weitere Vorsprung des weiteren Kundenanschlussflansches ineinander steckbar sind, wobei ferner ein weiterer Schritt des Verpressens des Hohlrads und des weiteren Kundenanschlussflansches und ein weiterer Schritt des stoffschlüssigen Verbindens des Hohlrads mit dem weiteren Kundenanschlussflansch mittels eines Fügeprozesses vorgesehen sind, wobei der Vorsprung des Hohlrads und der weitere Vorsprung des weiteren Kundenanschlussflansches ausgebildet sind, eine Übergangspassung zu bilden. Der weitere Kundenanschlussflansch kann mit anderen Kundenanschlussmaßen das Planetengetriebe in einer weiteren Anwendung nutzbar machen. Dies bietet den Vorteil, dass mit kurzen Entwicklungszeiten für neue Kundenanschlussmaße bei gleichzeitig kundenunabhängiger standardisierter Hohlradgeometrie und somit einer Verbesserung der Lieferfähigkeit erreicht werden kann. Dies kann eine Flexibilität bei Neukunden und für Varianten schaffen.

In einer zusätzlichen Ausführungsform kann im Schritt des Verpressens das Hohlrad und der Kundenanschlussflansch auf Anschlag verpresst werden und/oder im weiteren Schritt des Verpressens das Hohlrad und der weitere Kundenanschlussflansch auf Anschlag verpresst werden. Hierdurch kann eine formschlüssige Verbindung zwischen dem Hohlrad und dem Kundenanschlussflansch und/oder dem Hohlrad und dem weiteren Kundenanschlussflansch entstehen.

Durch die stoffschlüssige Verbindung wird eine Sicherung gegen Verdrehen erreicht. Eine stoffschlüssige Verbindung zwischen den Funktionselementen Hohlrad mit seiner Innenverzahnung und dem Kundenanschlussflansch beziehungsweise Stützring, welcher dem Kundenanschluss und als Lagersitz dient, kann sämtliche äußeren Lasten wie Kräfte und/oder Drehmomente und innere Lasten wie Biege-Umlauf-Beanspruchung übertragen. Hierbei können die technischen Restriktionen des durch die Kundenvorgaben eingeschränkten Bauraums und die Qualitätsanforderungen der gefügten Baugruppe Hohlrad berücksichtigt werden.

Auch ist es günstig, wenn im Schritt des stoffschlüssigen Verbindens das Hohlrad und der Kundenanschlussflansch mittels eines thermischen Fügeprozesses stoffschlüssig verbunden werden, insbesondere mittels Laserstrahltiefschweißen und/oder Elektronenstrahlschweißen und/oder im weiteren Schritt des stoffschlüssigen Verbindens das Hohlrad und der weitere Kundenanschlussflansch mittels eines thermischen Fügeprozesses stoffschlüssig verbunden werden, insbesondere mittels Laserstrahltiefschweißen und/oder Elektronenstrahlschweißen.

Die vorliegende Erfindung schafft ein Planetengetriebe mit einem Hohlrad und einem Kundenanschlussflansch, wobei das Hohlrad und der Kundenanschlussflansch mittels einer Übergangspassung miteinander verbunden sind, wobei das Hohlrad und der Kundenanschlussflansch hohlzylindrisch ausgebildet sind, wobei das Hohlrad zumindest einen Vorsprung aufweist und wobei der Kundenanschlussflansch zumindest einen Vorsprung aufweist und wobei das Hohlrad und der Kundenanschlussflansch mittels einer Übergangspassung miteinander verpresst und mittels eines Fügeprozesses stoffschlüssig miteinander verbunden sind.

Auch ist es günstig, wenn der Vorsprung des Hohlrads und der Vorsprung des Kundenanschlussflansches an einer einander zugewandten Stirnfläche ausgebildet sind, wobei der Vorsprung des Hohlrads und der Vorsprung des Kundenanschlussflansches ineinandergreifen, wobei ein Vorsprung der Vorsprünge als zur Hauptrotationsachse innenliegender Vorsprung und ein anderer Vorsprung der zumindest zwei Vorsprünge als zur Hauptrotationsachse außen liegender Vorsprung ausgebildet ist.

Ferner kann der innenliegende Vorsprung über eine Kontaktfläche mit dem außen liegenden Vorsprung verbindbar sein, wobei die Kontaktfläche parallel zur Hauptrotationsachse ausgerichtet ist. Die parallel zur Hauptrotationsachse der beiden hohlzylindrischen Körper Hohlrad und Kundenanschlussflansch kann eine Übergangspassung bilden. Dabei kann eine Seitenfläche eines Vorsprungs, welche in Kontakt steht und sich am außen liegenden Vorsprung befindet, als Bohrung betrachtet werden und eine Seitenfläche des anderen Vorsprungs, welches der innenliegende Vorsprung sein kann, kann als Welle betrachtet werden.

Auch ist es günstig, wenn eine Stirnseite des außen liegenden Vorsprungs mit einer korrespondierenden Fläche der zugewandten Stirnseite neben dem innenliegenden Vorsprung auf Anschlag verpressbar ist. Ein Verpressen auf Anschlag von Hohlrad und Kundenanschlussflansch kann eine formschlüssige Verbindung herstellen.

Günstig ist es auch, wenn in einer Ausführungsform der innenliegende Vorsprung einen Zentrierbund aufweist.

In einer Ausführungsform der vorliegenden Erfindung kann der innenliegende Vorsprung einen Freistich aufweisen. Unter einem Freistich kann eine Abtragung an einer rotationssymmetrischen Innenkante verstanden werden. Dabei können die Form und die Maße der Abtragung festgelegt sein. Ein Freistich kann dem anliegenden Teil und/oder Vorsprung beim Zusammenbau den erforderlichen Freiraum geben. Der Freistich kann eine an scharfen Übergängen auftretende Kerbwirkung verringern. Der Freistich kann das bündige Aufstecken von Gegenstücken gewährleisten.

Ferner kann gemäß einer Ausführungsform der innenliegende Vorsprung kürzer als der außen liegende Vorsprung ausgebildet sein. Dies ist zur Reduzierung von Eigenspannungen und zum axialen Längenausgleich von Vorteil.

Die vorliegende Erfindung kann als ein Fahrgetriebe und/oder ein Schwenkgetriebe für Viel- und/oder Wenigfahreranwendungen, ein Stationärgetriebe, ein Pitchgetriebe und/oder Azimutgetriebe für Windkraftanlagen und/oder eine von den genannten Getriebeformen abgeleitete Sondergetriebeform verwendet werden.

Die Erfindung wird nachstehend anhand der beigefügten Zeichnungen beispielhaft näher erläutert. Es zeigen:
- Fig. 1: Detaildarstellung einer Schnittstelle zum Verbinden von einem Hohlrad und einem Kundenanschlussflansch für flexible kundenspezifische Anschlussmaße für ein Planetengetriebe gemäß einem Ausführungsbeispiel der vorliegenden Erfindung;
- Fig. 2: Detaildarstellung eines innenliegenden Vorsprungs gemäß einem Ausführungsbeispiel der vorliegenden Erfindung;
- Fig. 3: Fahrgetriebe mit einteiligem Flansch gemäß herkömmlicher Bauweise;
- Fig. 4: Fahrgetriebe mit modularem Hohlrad-Stützring-Aufbau gemäß einem Ausführungsbeispiel der vorliegenden Erfindung; und
- Fig. 5: Ablaufdiagramm eines Verfahrens zum Verbinden von einem Hohlrad eines Planetengetriebes mit einem Kundenanschlussflansch für flexible kundenspezifische Anschlussmaße gemäß einem Ausführungsbeispiel der vorliegenden Verbindung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

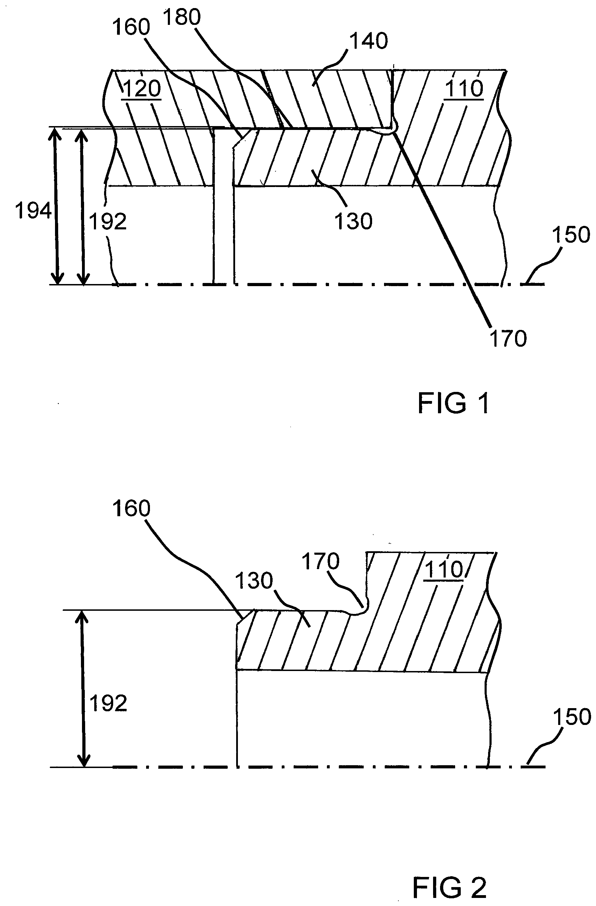

Fig. 1 zeigt eine Detaildarstellung einer Schnittstelle zum Verbinden von einem Hohlrad und einem Kundenanschlussflansch für flexible kundenspezifische Anschlussmaße für ein Planetengetriebe gemäß einem Ausführungsbeispiel der vorliegenden Erfindung. Ein Hohlrad 110 und ein Kundenanschlussflansch 120 sind mittels einer Übergangspassung verbunden. Sowohl das Hohlrad 110 als auch der Kundenanschlussflansch 120 sind im Wesentlichen hohlzylindrische Module. Die Wanddicke der beiden hohlzylindrischen Module ist in einem Toleranzbereich gleich. An der dem Kundenanschlussflansch 120 zugewandten Stirnfläche des Hohlrads 110 ist ein innenliegender Vorsprung 130 ausgebildet. An der dem Hohlrad 110 zugewandten Stirnfläche des Kundenanschlussflansches 120 ist ein außen liegender Vorsprung 140 ausgebildet. Der außen liegende Vorsprung 140 des Kundenanschlussflansches 120 ist in Bezug auf die Hauptrotationsachse 150 zum innenliegenden Vorsprung 130 des Hohlrads 110 außen angeordnet. Der an der Stirnfläche des Hohlrads 110 ausgebildete innenliegende Vorsprung 130 weist einen Zentrierbund 160 und einen Freistich 170 auf. Der Zentrierbund ist als eine Fase ausgebildet. In anderen, nicht gezeigten Ausführungsbeispielen betragen die Winkel der als Zentrierbund genutzten Fase zwischen 30° und 60°. Der innenliegende Vorsprung 130 auf der Stirnfläche des Hohlrads 110 ist zur Hauptrotationsachse 150 innenliegend auf der Stirnfläche angeordnet. Der Freistich 170 ist am Übergang der als parallel zur Hauptrotationsachse 150 angeordneten Kontaktfläche 180 zum Kundenanschlussflansch 120 und der auf Kontakt verpressbaren Stirnfläche außerhalb des innenliegenden Vorsprungs 130 ausgebildet. Der Zentrierbund 160 ist am Übergang von der Kontaktfläche 180 und der Stirnseite des innenliegenden Vorsprungs 130. Der innenliegende Vorsprung 130 des Hohlrads 110 ist im Verhältnis zum außen liegenden Vorsprung 140 des Kundenanschlussflansches 120 verkürzt ausgebildet.

Die Bemaßung des Außendurchmessers 192 des innenliegenden Vorsprungs 130 an der Außenfläche beziehungsweise Kontaktfläche 180 des innenliegenden Vorsprungs 130 des Hohlrads 110 ist mit einer Toleranz von h7 versehen, das heißt, der Außendurchmesser 192 des Vorsprungs 130 des Hohlrads 110 kann gleich oder größer zum Nennmaß ausgebildet sein. Die Bemaßung des Innendurchmessers 194 des außen liegenden Vorsprungs 140 des Kundenanschlussflansches 120 ist mit einer Toleranz von M8 versehen, das heißt, der Durchmesser 194 kann gleich oder kleiner dem Nennmaß ausgebildet sein. In einem Ausführungsbeispiel beträgt die tatsächliche Toleranz für den Außendurchmesser 192 des innenliegenden Vorsprungs 130 +0,05 mm. In einem weiteren Ausführungsbeispiel beträgt der Toleranzbereich für den Außendurchmesser 192 des Vorsprungs 130 an dem Hohlrad 110 Null bis 0,05 mm. In Abhängigkeit von den Istmaßen entsteht je nach Ausführungsbeispiel bei den vorgegebenen Toleranzen beim Fügen des Hohlrads 110 und des Kundenanschlussflansches 120 entsprechend einer Übergangspassung entweder eine Spielpassung und/oder ein Übermaß.

Die Ausführung des Hohlradringes 110 erfolgt als rohrförmiges Bauteil mit einem Zentrierbund 160 zur Aufnahme des kundenindividuellen Stützringes 120. Die Schnittstelle zwischen beiden Bauteilen ist als Übergangspassung im Toleranzbereich Innendurchmesser 194 M8 und Außendurchmesser 192 h6 /+0,05 mm ausgeführt. Im Bereich des äußeren Durchmessers 192 werden beide Bauteile auf Anschlag verpresst. Der innere Zentrierbund 160 weist eine Wandstärke von s ≤ 5 mm auf und ist zur Reduzierung von Eigenspannungen und zum axialen Längenausgleich verkürzt. Die Zentrierung ist zudem am Ende mit einen Freistich 170 ausgeführt.

In einem weiteren nicht gezeigten Ausführungsbeispiel sind der innenliegende Vorsprung 130 und der außen liegende Vorsprung 140 in Bezug auf das Hohlrad 110 und den Kundenanschlussflansch 120 vertauscht, sodass der innenliegende Vorsprung 130 Teil des Kundenanschlussflansches 120 und der außen liegende Vorsprung 140 Teil des Hohlrads 110 ist.

Fig. 2 zeigt eine Detaildarstellung eines innenliegenden Vorsprungs gemäß einem Ausführungsbeispiel der vorliegenden Erfindung. Bei dem gezeigten Ausführungsbeispiel weist ein Hohlrad 110 einen Vorsprung 130 auf. Das Hohlrad ist ein hohlzylindrischer Körper, der ausgebildet ist, um eine Hauptrotationsachse 150 zu rotieren. Das Hohlrad 110 weist an einer Stirnfläche einen Vorsprung 130 auf. Der Vorsprung 130 ist auf der Stirnfläche in Bezug zur Hauptrotationsachse 150 innenliegend angeordnet. Der Vorsprung 130 weist für seine äußere Mantelfläche einen Durchmesser 192 auf. Der Durchmesser 192 kann auch analog zu einer Welle als Außendurchmesser 192 bezeichnet werden. Ebenfalls analog zu einer Welle ist das Maß des Außendurchmessers mit einer Toleranz M8 versehen. Die äußere Mantelfläche des Vorsprungs 130 weist am Übergang zur Stirnfläche des Hohlrads 110 einen Freistich 170 auf. Die äußere Mantelfläche des Vorsprungs 130 weist auf der dem Freistich gegenüberliegenden Seite einen Zentrierbund 160 auf.

In einem weiteren Ausführungsbeispiel der vorliegenden Erfindung ist der in Fig. 2 dargestellte innenliegende Vorsprung 130 dem Kundenanschlussflansch 120 zugeordnet.

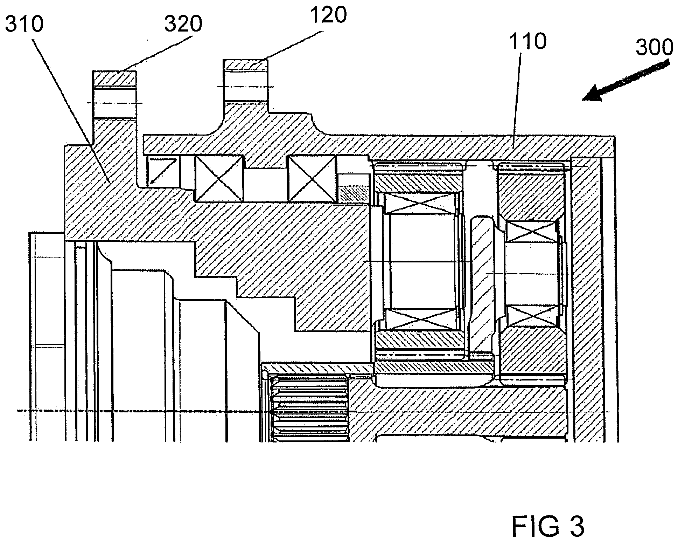

Fig. 3 zeigt ein Planetengetriebe mit einteiligem Flansch gemäß herkömmlicher Bauweise. Das Planetengetriebe 300, auch teilweise als Fahrgetriebe 300 bezeichnet, weist unter anderem eine Tragachse 310 mit einem Rahmenanschlussflansch 320, einen Kundenanschlussflansch 120 und ein Hohlrad 110 auf. Das Hohlrad 110 und der Kundenanschlussflansch 120 sind als ein Bauteil realisiert. Das Bauteil weist auch die Funktion eines Stützringes auf. Der Rahmenanschlussflansch 320 ist ein Teil der Tragachse 310. Die Tragachse 310 weist eine hohlzylindrische Form auf. Innerhalb des Hohlrads 110 ist ein Planetengetriebe angeordnet. Fig. 3 zeigt eine einteilige Ausführungsform.

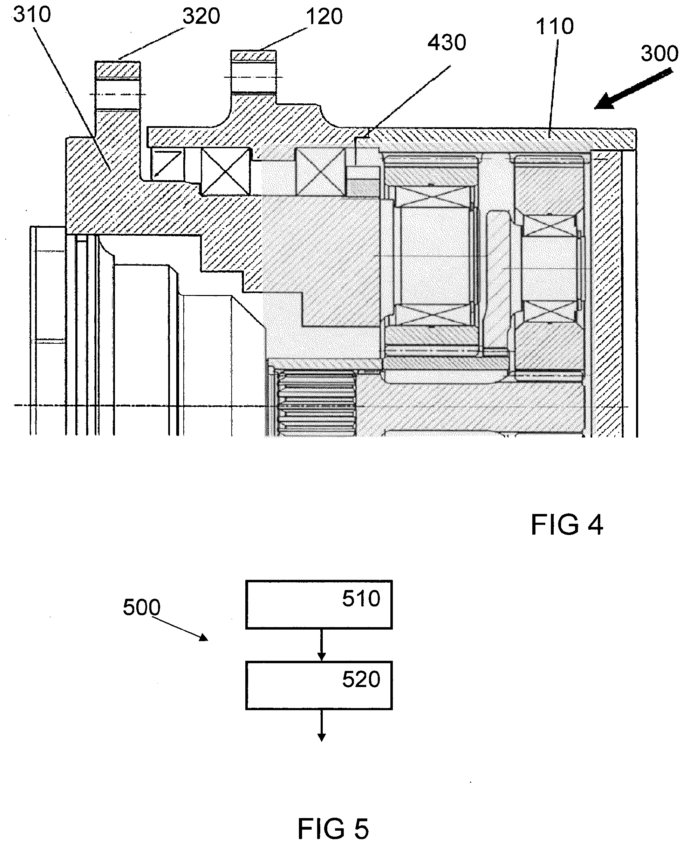

Fig. 4 zeigt ein Fahrgetriebe mit modularem Hohlrad-Stützring-Aufbau gemäß einem Ausführungsbeispiel der vorliegenden Erfindung. Das Planetengetriebe 300 weist eine Tragachse 310 mit einem Rahmenanschlussflansch 320, einen Kundenanschlussflansch 120 und ein Hohlrad 110 auf. Im Unterschied zu dem in Fig. 3 gezeigten Planetengetriebe 300 sind das Hohlrad 110 und der Kundenanschlussflansch 120 als zwei separate Bauteile ausgeführt, welche über eine Schnittstelle 430 verbunden sind. Die Schnittstelle 430 entspricht der in Fig. 1 gezeigten Verbindung von Hohlrad 110 und Kundenanschlussflansch 120. Hierbei ist die Schnittstelle 430 zwischen der Hohlradinnenverzahnung und dem Lagersitz der Hauptlagerung dargestellt. Die stoffschlüssige Verbindung ist im dargestellten Ausführungsbeispiel über einen thermischen Fügeprozess ausgeführt, wie beispielsweise Laser- und/oder Elektronenstrahlschweißen.

Das hier vorgestellte Konzept einer Hohlrad-Stützring-Konstruktion zur Darstellung modularer Hohlradstufen und zur flexiblen Realisierung kundenspezifischer Anschlussmaße kann verwendet werden für Fahr· und Schwenkgetriebe für Viel- und Wenigfahreranwendungen, Stationärgetriebe, Pitch- und Azimuthgetriebe für Windkraftanlagen und/oder jegliche abgeleitete Sondergetriebeformen.

Fig. 5 zeigt ein Ablaufdiagramm eines Verfahrens zum Verbinden von einem Hohlrad eines Planetengetriebes mit einem Kundenanschlussflansch für flexible kundenspezifische Anschlussmaße gemäß einem Ausführungsbeispiel der vorliegenden Verbindung. Das Verfahren weist einen Schritt des Bereitstellens 510 und einen Schritt des Verpressens 520 auf. Im Schritt des Bereitstellens 510 wird ein Hohlrad bereitgestellt, wobei das Hohlrad einen Vorsprung aufweist. Weiterhin wird im Schritt des Bereitstellens 510 der Kundenanschlussflansch bereitgestellt, wobei der Kundenanschlussflansch einen Vorsprung aufweist. Der Vorsprung des Hohlrads und der Vorsprung des Kundenanschlussflansches sind ineinander steckbar. Im Schritt des Verpressens 520 wird das Hohlrad und der Kundenanschlussflansch miteinander verpresst, wobei sich eine Übergangspassung zwischen dem Vorsprung des Hohlrads und dem Vorsprung des Kundenanschlussflansches ergibt.

Die verpressten Bauteile werden abschließend mittels eines thermischen Fügeprozesses (Laserstrahltiefschweißen, Elektronenstrahlschweißen, etc.) stoffschlüssig verbunden.

Die gezeigten Ausführungsbeispiele sind nur beispielhaft gewählt und können miteinander kombiniert werden, solange sie unter dem Schutzumfang der beigelegten Ansprüche fallen.

### Bezugszeichenliste

- 110: Hohlrad
- 120: Kundenanschlussflansch
- 130: innenliegender Vorsprung
- 140: außen liegender Vorsprung
- 150: Hauptrotationsachse
- 160: Zentrierbund
- 170: Freistich
- 180: Kontaktfläche
- 192: Außendurchmesser
- 194: Innendurchmesser

- 300: Planetengetriebe
- 310: Tragachse
- 320: Rahmenanschlussflansch

- 430: Schnittstelle

- 500: Verfahren
- 510: Schritt des Bereitstellens
- 520: Schritt des Verpressens

## Patentansprüche

1. Verfahren (500) zum Verbinden von einem Hohlrad (110) eines Planetengetriebes (300) mit einem Kundenanschlussflansch (120) für flexible kundenspezifische Anschlussmaße, wobei das Verfahren (500) die folgenden Schritte umfasst:
Bereitstellen (510) des Hohlrads (110), wobei das Hohlrad (110) einen Vorsprung (130) aufweist, und Bereitstellen (510) des Kundenanschlussflansches (120), wobei der Kundenanschlussflansch (120) einen Vorsprung (140) aufweist und wobei der Vorsprung (130) des Hohlrads (110) und der Vorsprung (140) des Kundenanschlussflansches (120) ineinander steckbar sind;
wobei das Verfahren durch folgende weitere Schritte gekennzeichnet ist:
Verpressen (520) des Hohlrads (110) und des Kundenanschlussflansches (120), wobei der Vorsprung (130) des Hohlrads (110) und der Vorsprung (140) des Kundenanschlussflansches (120) ausgebildet sind, eine Übergangspassung zu bilden;
stoffschlüssiges Verbinden des Hohlrads (110) mit dem Kundenanschlussflansch (120) mittels eines Fügeprozesses.

2. Verfahren (500) gemäß Anspruch 1, mit einem weiteren Schritt des Bereitstellens, wobei im weiteren Schritt des Bereitstellens das Hohlrad (110) und ein weiterer Kundenanschlussflansch bereitgestellt werden, wobei der weitere Kundenanschlussflansch vom Kundenanschlussflansch (120) abweichende Kundenanschlussmaße aufweist, wobei der weitere Kundenanschlussflansch einen weiteren Vorsprung aufweist, wobei der Vorsprung (130) des Hohlrads (110) und der weitere Vorsprung des weiteren Kundenanschlussflansches ineinander steckbar sind, wobei ferner ein weiterer Schritt des Verpressens des Hohlrads (110) und des weiteren Kundenanschlussflansches vorgesehen ist, wobei der Vorsprung (130) des Hohlrads (110) und der weitere Vorsprung des weiteren Kundenanschlussflansches ausgebildet sind, eine Übergangspassung zu bilden,
und mit einem weiteren Schritt des stoffschlüssigen Verbindens des Hohlrads (110) mit dem weiteren Kundenanschlussflansch mittels eines Fügeprozesses.

3. Verfahren (500) gemäß einem der vorangegangenen Ansprüche, bei dem im Schritt des Verpressens (520) das Hohlrad (110) und der Kundenanschlussflansch (120) auf Anschlag verpresst werden und/oder bei dem im weiteren Schritt des Verpressens das Hohlrad (110) und der weitere Kundenanschlussflansch auf Anschlag verpresst werden.

4. Verfahren (500) gemäß einem der vorangegangenen Ansprüche, bei dem im Schritt des stoffschlüssigen Verbindens das Hohlrad (110) mit dem Kundenanschlussflansch (120) mittels eines thermischen Fügeprozesses stoffschlüssig verbunden wird, insbesondere mittels Laserstrahltiefschweißen und/oder Elektronenstrahlschweißen und/oder bei dem im weiteren Schritt des stoffschlüssigen Verbindens das Hohlrad (110) mit dem weiteren Kundenanschlussflansch mittels eines thermischen Fügeprozesses stoffschlüssig verbunden wird, insbesondere mittels Laserstrahltiefschweißen und/oder Elektronenstrahlschweißen.

5. Planetengetriebe (300) mit einem Hohlrad (110) und einem Kundenanschlussflansch (120), wobei das Hohlrad (110) und der Kundenanschlussflansch (120) hohlzylindrisch ausgebildet sind, wobei das Hohlrad (110) zumindest einen Vorsprung (130) aufweist und wobei der Kundenanschlussflansch (120) zumindest einen Vorsprung (140) aufweist,
**dadurch gekennzeichnet, dass** das Hohlrad (110) und der Kundenanschlussflansch (120) mittels einer Übergangspassung miteinander verpresst und mittels eines Fügeprozesses stoffschlüssig miteinander verbunden sind.

6. Planetengetriebe (300) gemäß Anspruch 5, bei dem der Vorsprung (130) des Hohlrads (110) und der Vorsprung (140) des Kundenanschlussflansches (120) an einer einander zugewandten Stirnfläche ausgebildet sind, wobei der Vorsprung (130) des Hohlrads (110) und der Vorsprung (140) des Kundenanschlussflansches (120) ineinandergreifen, wobei ein Vorsprung (130) der zumindest zwei Vorsprünge (130, 140) als zur Hauptrotationsachse (150) innenliegender Vorsprung (130) und ein anderer Vorsprung (140) der zumindest zwei Vorsprünge (130, 140) als zur Hauptrotationsachse (150) außen liegender Vorsprung (140) ausgebildet ist.

7. Planetengetriebe (300) gemäß Anspruch 6, bei dem der innenliegende Vorsprung (130) über eine Kontaktfläche (180) mit dem außen liegenden Vorsprung (140) verbindbar ist, wobei die Kontaktfläche (180) parallel zur Hauptrotationsachse (150) ausgerichtet ist.

8. Planetengetriebe (300) gemäß einem der Ansprüche 6 bis 7, bei dem eine Stirnseite des außen liegenden Vorsprungs (140) mit einer korrespondierenden Fläche der zugewandten Stirnseite neben dem innenliegenden Vorsprung (130) auf Anschlag verpressbar ist.

9. Planetengetriebe (300) gemäß einem der Ansprüche 6 bis 8, bei dem der innenliegende Vorsprung (130) einen Zentrierbund (160) aufweist.

10. Planetengetriebe (300) gemäß einem der Ansprüche 6 bis 9, bei dem der innenliegende Vorsprung (130) einen Freistich (170) aufweist.

11. Planetengetriebe (300) gemäß einem der Ansprüche 6 bis 10, bei dem der innenliegende Vorsprung (130) kürzer als der außen liegende Vorsprung (140) ausgebildet ist.

## Claims

1. Method (500) for connecting an internal gear (110) of a planetary gear mechanism (300) to a customer connector flange (120) for flexible customer-specific connector dimensions, the method (500) comprising the following steps:
provision (510) of the internal gear (110), the internal gear (110) having a projection (130), and provision (510) of the customer connector flange (120), the customer connector flange (120) having a projection (140), and it being possible for the projection (130) of the internal gear (110) and the projection (140) of the customer connector flange (120) to be plugged into one another;
the method being **characterized by** the following further steps:
pressing (520) of the internal gear (110) and the customer connector flange (120), the projection (130) of the internal gear (110) and the projection (140) of the customer connector flange (120) being configured to form a transition fit;
integrally joined connection of the internal gear (110) to the customer connector flange (120) by means of a joining process.

2. Method (500) according to Claim 1, having a further step of provision, the internal gear (110) and a further customer connector flange being provided in the further step of provision, the further customer connector flange having customer connector dimensions which differ from the customer connector flange (120), the further customer connector flange having a further projection, it being possible for the projection (130) of the internal gear (110) and the further projection of the further customer connector flange to be plugged into one another, a further step of pressing of the internal gear (110) and the further customer connector flange, furthermore, being provided, the projection (130) of the internal gear (110) and the further projection of the further customer connector flange being configured to form a transition fit,
and having a further step of the integrally joined connection of the internal gear (110) to the further customer connector flange by means of a joining process.

3. Method (500) according to either of the preceding claims, in which, in the step of pressing (520), the internal gear (110) and the customer connector flange (120) are pressed up to the stop, and/or in which, in the further step of pressing, the internal gear (110) and the further customer connector flange are pressed up to the stop.

4. Method (500) according to one of the preceding claims, in which, in the step of the integrally joined connection, the internal gear (110) is connected to the customer connector flange (120) in an integrally joined manner by means of a thermal joining process, in particular by means of deep penetration laser welding and/or electron beam welding, and/or in which, in the further step of the integrally joined connection, the internal gear (110) is connected to the further customer connector flange in an integrally joined manner by means of a thermal joining process, in particular by means of deep penetration laser welding and/or electron beam welding.

5. Planetary gear mechanism (300) having an internal gear (110) and a customer connector flange (120), the internal gear (110) and the customer connector flange (120) being of hollow-cylindrical configuration, the internal gear (110) having at least one projection (130), and the customer connector flange (120) having at least one projection (140), **characterized in that** the internal gear (110) and the customer connector flange (120) are pressed to one another by means of a transition fit and are connected to one another in an integrally joined manner by means of a joining process.

6. Planetary gear mechanism (300) according to Claim 5, in which the projection (130) of the internal gear (110) and the projection (140) of the customer connector flange (120) are configured on end faces which face one another, the projection (130) of the internal gear (110) and the projection (140) of the customer connector flange (120) engaging into one another, one projection (130) of the at least two projections (130, 140) being configured as an inner projection (130) with respect to the main axis of rotation (150), and another projection (140) of the at least two projections (130, 140) being configured as an outer projection (140) with respect to the main axis of rotation (150).

7. Planetary gear mechanism (300) according to Claim 6, in which the inner projection (130) can be connected via a contact face (180) to the outer projection (140), the contact face (180) being oriented parallel to the main axis of rotation (150).

8. Planetary gear mechanism (300) according to either of Claims 6 and 7, in which an end side of the outer projection (140) can be pressed up to the stop to a corresponding face of the facing end side next to the inner projection (130).

9. Planetary gear mechanism (300) according to one of Claims 6 to 8, in which the inner projection (130) has a centring collar (160).

10. Planetary gear mechanism (300) according to one of Claims 6 to 9, in which the inner projection (130) has a recess (170).

11. Planetary gear mechanism (300) according to one of Claims 6 to 10, in which the inner projection (130) is of shorter configuration than the outer projection (140).

## Revendications

1. Procédé (500) pour connecter une couronne dentée (110) d'un engrenage épicycloïdal (300) à une bride de raccordement client (120) pour une dimension de raccordement flexible spécifique au client, le procédé (500) comprenant les étapes suivantes :
fournir (510) la couronne dentée (110), la couronne dentée (110) présentant une saillie (130), et fournir (510) la bride de raccordement client (120), la bride de raccordement client (120) présentant une saillie (140) et la saillie (130) de la couronne dentée (110) et la saillie (140) de la bride de raccordement client (120) pouvant être enfichées l'une dans l'autre ;
le procédé étant **caractérisé par** les étapes supplémentaires suivantes :
presser (520) la couronne dentée (110) et la bride de raccordement client (120), la saillie (130) de la couronne dentée (110) et la saillie (140) de la bride de raccordement client (120) étant réalisées pour former un ajustement de transition ;
raccorder, par liaison de matière, la couronne dentée (110) à la bride de raccordement client (120) au moyen d'un processus d'assemblage.

2. Procédé (500) selon la revendication 1, comprenant une étape supplémentaire de fourniture, la couronne dentée (110) et une bride de raccordement client supplémentaire étant fournies dans l'étape supplémentaire de fourniture, la bride de raccordement client supplémentaire présentant une dimension de raccordement client s'écartant de celle de la bride de raccordement client (120), la bride de raccordement client supplémentaire présentant une saillie supplémentaire, la saillie (130) de la couronne dentée (110) et la saillie supplémentaire de la bride de raccordement client supplémentaire pouvant être enfichées l'une dans l'autre, une étape supplémentaire de pressage de la couronne dentée (110) et de la bride de raccordement client supplémentaire étant en outre prévue, la saillie (130) de la couronne dentée (110) et la saillie supplémentaire de la bride de raccordement client supplémentaire étant réalisées de manière à former un ajustement de transition, et comprenant une étape supplémentaire de raccordement, par liaison de matière, de la couronne dentée (110) à la bride de raccordement client supplémentaire au moyen d'un processus d'assemblage.

3. Procédé (500) selon l'une quelconque des revendications précédentes, dans lequel, dans l'étape de pressage (520), la couronne dentée (110) et la bride de raccordement client (120) sont pressées en butée et/ou dans lequel, dans l'étape supplémentaire de pressage, la couronne dentée (110) et la bride de raccordement client supplémentaire sont pressées en butée.

4. Procédé (500) selon l'une quelconque des revendications précédentes, dans lequel, dans l'étape de raccordement par liaison de matière, la couronne dentée (110) est raccordée par liaison de matière à la bride de raccordement client (120) au moyen d'un processus d'assemblage thermique, en particulier au moyen d'un soudage profond à faisceau laser et/ou d'un soudage à faisceau d'électrons et/ou dans lequel, dans l'étape supplémentaire de raccordement par liaison de matière, la couronne dentée (110) est raccordée par liaison de matière à la bride de raccordement client supplémentaire au moyen d'un processus d'assemblage thermique, en particulier au moyen d'un soudage profond à faisceau laser et/ou d'un soudage à faisceau d'électrons.

5. Engrenage épicycloïdal (300) comprenant une couronne dentée (110) et une bride de raccordement client (120), la couronne dentée (110) et la bride de raccordement client (120) étant réalisées sous forme cylindrique creuse, la couronne dentée (110) présentant au moins une saillie (130) et la bride de raccordement client (120) présentant au moins une saillie (140),
**caractérisé en ce que** la couronne dentée (110) et la bride de raccordement client (120) sont pressées ensemble au moyen d'un ajustement de transition et sont raccordées l'une à l'autre par liaison de matière au moyen d'un processus d'assemblage.

6. Engrenage épicycloïdal (300) selon la revendication 5, dans lequel la saillie (130) de la couronne dentée (110) et la saillie (140) de la bride de raccordement client (120) sont réalisées au niveau de leurs surfaces frontales tournées l'une vers l'autre, la saillie (130) de la couronne dentée (110) et la saillie (140) de la bride de raccordement client (120) s'engageant l'une dans l'autre, une saillie (130) des au moins deux saillies (130, 140) étant réalisée en tant que saillie (130) située à l'intérieur par rapport à l'axe de rotation principal (150) et une autre saillie (140) des au moins deux saillies (130, 140) étant réalisée sous forme de saillie (140) située à l'extérieur par rapport à l'axe de rotation principal (150).

7. Engrenage épicycloïdal (300) selon la revendication 6, dans lequel la saillie (130) située à l'intérieur peut être raccordée par le biais d'une surface de contact (180) à la saillie (140) située à l'extérieur, la surface de contact (180) étant orientée parallèlement à l'axe de rotation principal (150).

8. Engrenage épicycloïdal (300) selon l'une quelconque des revendications 6 à 7, dans lequel un côté frontal de la saillie (140) située à l'extérieur peut être pressé en butée avec une surface correspondante du côté frontal tourné vers elle à côté de la saillie (130) située à l'intérieur.

9. Engrenage épicycloïdal (300) selon l'une quelconque des revendications 6 à 8, dans lequel la saillie (130) située à l'intérieur présente un épaulement de centrage (160).

10. Engrenage épicycloïdal (300) selon l'une quelconque des revendications 6 à 9, dans lequel la saillie (130) située à l'intérieur présente un dégagement par rainure (170).

11. Engrenage épicycloïdal (300) selon l'une quelconque des revendications 6 à 10, dans lequel la saillie (130) située à l'intérieur est réalisée sous forme plus courte que la saillie (140) située à l'extérieur.
